# EUROPÄISCHE PATENTSCHRIFT

(11) **EP 0 954 710 B1**
(45) Veröffentlichungstag und Bekanntmachung des Hinweises auf die Patenterteilung: **01.08.2001**
(21) Anmeldenummer: 98902955.8
(22) Anmeldetag: 09.01.1998
(51) Int. Cl.: F16G 13/16

(54) **ENERGIEZUFÜHRUNGSKETTE**
ENERGY FEED CHAIN
CHAINE D'ALIMENTATION EN ENERGIE

(30) Priorität: 21.01.1997 DE 19701706
(43) Veröffentlichungstag der Anmeldung: 10.11.1999
(73) Patentinhaber: IGUS SPRITZGUSSTEILE FÜR DIE INDUSTRIE GmbH, D-51147 Köln (DE)
(72) Erfinder: BLASE, Günter, D-51429 Bergisch Gladbach (DE)
(74) Vertreter: Lippert, Hans-Joachim, Dipl.-Ing.
(86) Internationale Anmeldenummer: DE9800092
(87) Internationale Veröffentlichungsnummer: WO9831950

(56) Entgegenhaltungen:
- EP-A- 0 277 389
- WO-A-97/30299
- DE-A- 3 531 066
- DE-A- 3 822 385
- DE-A- 4 325 259
- FR-A- 2 296 808
- US-A- 3 192 704

## Beschreibung

Die Erfindung betrifft eine Energiezuführungskette zum Führen von Kabeln, Schläuchen oder dergleichen von einem ortsfesten zu einem beweglichen Anschlußpunkt auf einer gekrümmten Bahn, mit gelenkig miteinander verbundenen und gegeneinander abwinkelbaren Kettenlaschen, wobei die Gelenkachsen wenigstens einiger Kettenlaschen sich schneiden.

Eine derartige Energiezuführungskette ist beispielsweise aus der EP 0 277 389 bekannt. Diese Kette wird durch auf an und für sich bekannte Art und Weise gelenkig miteinander verbundene Kettenglieder gebildet, wobei die Kettenglieder jeweils durch zwei zueinander in etwa parallel angeordnete Kettenlaschen gebildet sind, die jeweils über eine untere einstückig angeformte Bodenplatte und einen oberen lösbaren bzw. abnehmbaren Quersteg miteinander verbunden sind. Jeweils ein Kettenglied ist mit dem benachbarten Kettenglied über zwei zungenartige Laschenfortsätze verbunden, die in entsprechende schlitzförmiger Aufnahmen der benachbarten Kettenlaschen eingreifen und über durch die Aufnahmen und die Laschenfortsätze geführte Paßstifte gelenkig mit diesen verbunden sind. Um eine Auf- und Abrollbewegung der Energiezuführungskette auf einer gekrümmten, beispielsweise wendelförmigen Bahn zu gewährleisten und um eine Krümmung der Kette zu erzeugen, sind die den Krümmungsmittelpunkt zugewandten Innenlaschen der Kette kürzer als die abliegenden Außenlaschen der Kette. Darüber hinaus hat die die Kettenlaschen verbindende Bodenplatte eine trapezoide Form. Die Gelenkachsen jedes Kettengliedes stehen unter einem Winkel zueinander, wobei der Schnittpunkt der Achsen den Krümmungsmittelpunkt der Kette definiert.

Hierdurch kann die bekannte Kette während ihrer Auf- und Abrollbewegung dem Verlauf einer Kurve auch mit Schräglage folgen. Dies bietet den Vorzug, daß beispielsweise sich drehende Energieabnehmer wie Montageroboter oder dergleichen über eine solche Energiezuführungskette an geschützt und zugentlastet angeordnete Energiezuführungsleitungen angeschlossen werden können.

Die in der EP 0 277 389 offenbarte Energiezuführungskette hat allerdings den Nachteil, daß aufgrund der unterschiedlichen Länge der Laschen und aufgrund der zueinander abgewinkelten Gelenkachsen die Passungen der Gelenkverbindungen sehr weit ausgeführt sein müssen, um die Leichtgängigkeit der Kette, d. h. um eine leichte Abrollbewegung der Kette zu gewährleisten. Die bekannte Kette muß mit sehr großen Toleranzen hergestellt werden. Die Zapfen und Bohrungen müssen mit sehr viel Spiel ineinandergreifen, da die Kette nicht nur eine Kreisbewegung vollziehen muß, sondern gleichzeitig auch eine Höhenbewegung. Durch diese Krümmung in zwei Ebenen muß sich der Kettenstrang in gewissen Grenzen verwinden können. Aufgrund des großen Spiels der Gelenkverbindungen sind wiederum besonders ausgebildete Führungselemente bzw. Führungsrinnen zur seitlichen Stabilisierung der Kette unabdingbar. Darüber hinaus hat die bekannte Energiezuführungskette den Nachteil, daß zur Bildung unterschiedlicher Kreisradien und unterschiedlichen Aufnahmeraums für Energieleitungen in Gestalt und Abmessung verschiedene Kettenglieder verfügbar sein müssen.

Aufgabe der Erfindung ist es daher, eine Energiezuführungskette der eingangs genannten Art derart zu verbessern, daß diese mit eng tolerierten Gelenkverbindungen unter Beibehaltung guter Gleit- und Rolleigenschaften herstellbar ist. Die Kette gemäß der Erfindung soll insbesondere leicht zu montieren sein und eine optimale Anpassung an den Bewegungsablauf der auszurüstenden Maschine sowie an den gewünschten Aufnahmeraum mit einfachen Mitteln gewährleisten.

Die Aufgabe wird durch eine Energiezuführungskette mit den Merkmalen des Oberbegriffs von Anspruch 1 gelöst, die sich dadurch auszeichnet, daß die Kette durch nur einen Laschenstrang gebildet wird und daß an zumindest einigen der Kettenlaschen jeweils wenigstens ein Tragrahmen zur Aufnahme der Kabel, Schläuche oder dergleichen vorgesehen ist.

Eine solche aus nur einem Laschenstrang gebildete Kette hat diverse Vorzüge gegenüber der bekannten Kette. Diese ist wesentlich einfacher zu montieren, die Gelenkverbindungen können nahezu spielfrei ausgeführt sein und vor allen Dingen kann der für die Aufnahme von Kabeln, Schläuchen oder dergleichen zur Verfügung stehende Nutzraum in der Breite variierbar sein. Dies ist insbesondere durch die Verwendung der an den Kettenlaschen vorgesehenen Tragrahmen zur Aufnahme der Kabel möglich.

Bei Versuchen mit der Energiezuführungskette gemäß EP 0 277 389 hat sich herausgestellt, daß praktisch die gesamte Belastung des Kettenstrangs von dem äußeren Laschenstrang aufgenommen wird. Die Erfindung macht sich dies insoweit zunutze, als daß auf einen Kettenstrang gänzlich verzichtet wird, so daß neben einer beträchtlichen Gewichtseinsparung die Passungen des einsträngigen Kettenbandes sehr eng ausgeführt sein können, wodurch die Seitenstabilität der Kette und gleichzeitig deren Verformbarkeit und Verwindbarkeit verbessert wird. Die Tragrahmen können sowohl zum Kurveninneren als auch zum Kurvenäußeren der Kette angeordnet sein.

Bei einer bevorzugten Weiterbildung der Erfindung ist vorgesehen, daß der Tragrahmen durch lösbar an den Kettenlaschen befestigbare obere und untere Querstege gebildet wird, die durch ein lösbares Verbindungsglied zu einem geschlossenen Rahmen zusammengesetzt sind. Hierzu können Querstege üblicher, d. h. herkömmlicher Kettenglieder Verwendung finden.

Alternativ kann der Tragrahmen durch einen einstückig ausgebildeten U-förmigen Bügel oder dergleichen gebildet sein, der lösbar an den Kettenlaschen befestigbar ist. Mittels lösbar an den Kettenlaschen befestigbarer Tragrahmen oder Tragbügel sind die Breite und der Nutzraum der Kette variabel.

Bei einem besonders bevorzugten Ausführungsbeispiel ist vorgesehen, daß abwechselnd Kettenlaschen mit zueinander parallelen Gelenkachsen und Kettenlaschen mit sich schneidenden Gelenkachsen miteinander zu einem Kettenstrang verbunden sind. Die sich schneidenden Gelenkachsen schneiden sich dabei nicht alle in einem Punkt, sondern laufen auf einen Kreisbogen zu. Der Mittelpunkt dieses Kreisbogens definiert den Mittelpunkt der Kreisbewegung. Die abwechselnde Anordnung von Kettenlaschen mit sich schneidenden Gelenkachsen und mit zueinander parallelen Gelenkachsen hat den Vorzug, daß bei Änderung des Kreisdurchmessers jeweils nur ein Kettenglied ausgetauscht werden muß.

Zweckmäßigerweise sind die Gelenkbereiche der Kettenlasche mit sich schneidenden Gelenkachsen durch zueinander abgewinkelte Laschenbereiche gebildet.

Beispielsweise können benachbarte miteinander verbundene Kettenlaschen sich gegenseitig überlappen und über Löcher und Zapfen formschlüssig ineinandergreifen.

Als besonders zweckmäßig hat sich erwiesen, wenn jeweils eine Kettenlasche auf den beiden unmittelbar benachbarten Kettenlaschen mit der gleichen Seite aufliegt, wobei jeweils eine Kettenlasche mit Löchern und die unmittelbar benachbarte Kettenlasche mit hervorstehenden Zapfen versehen ist, die in die Löcher der benachbarten Kettenlasche eingreifen.

Um den Kettenstrang sicher zusammenhalten zu können, kann vorgesehen sein, daß die jeweils den Tragrahmen bildenden oberen und unteren Querstege oder die Schenkel des U-förmigen Bügels an jeweils einer Außenlasche in ihren Endabschnitten so bemessen sind, daß sie den Überlappungsbereich mit den benachbarten Kettenlaschen übergreifen und als Anschlag gegen Trennung der Kettenlaschen quer zur Laufrichtung wirken. Eine solche Ausbildung von Querstegen ist an und für sich bekannt, erweist sich jedoch bei der erfindunggemäßen Energiezuführungskette als besonders zweckmäßig. Vorzugsweise sind die Kettenlaschen jeweils mit als Rastleisten ausgebildeten Ansätzen versehen, die mit entsprechenden Rastausnehmungen der oberen und unteren Querstege oder der Schenkel des Bügels auf an sich bekannte Art und Weise zusammenwirken.

Als zusätzliche Sicherung gegen eine Trennung der Kettenlaschen quer zur Laufrichtung weisen die mit Zapfen versehenen Laschen jeweils an ihren äußeren Rändern einen teilweise umlaufenden Absatz auf, der von Haltevorsprüngen der mit Löchern versehenen Laschen übergriffen wird.

Bei einer besonders bevorzugten Ausführungsform der Erfindung ist vorgesehen, daß das Verbindungsglied mit als Rastleisten ausgebildeten Ansätzen versehen ist, die mit Rastausnehmungen der oberen und unteren Querstege zusammenwirken. Auf diese Art und Weise läßt sich der Tragrahmen zur Aufnahme der Kabel mittels Querstegen für herkömmliche Energiezuführungsketten zusammensetzen.

Alternativ zu einem Tragrahmen können an zumindest einigen der Kettenlaschen Tragschlaufen zur Aufnahme der Kabel vorgesehen sein. Hierdurch würden Gewicht und Abmessungen der erfindungsgemäßen Kette weiter reduziert werden, was sich günstig auf die Laufeigenschaften der Kette auswirkt.

Als zusätzliche Führungshilfe können wenigstens einige der Kettenlaschen auf wenigstens einer ihrer Schmalseiten mit Führungsansätzen versehen sein, die mit einer in einer Führungsschiene oder dergleichen vorgesehenen Nut zusammenwirken. Insbesondere bei großen Kettenradien können solche Führungsansätze zweckmäßig sein, die mit Spiel in die hierfür vorgesehene Führungsnut eingreifen. Die Führungsansätze und die Führungsnut verhindern eine zu große Beanspruchung der Kette quer bzw. tangential zu ihrer Bewegungsrichtung.

Die Erfindung wird nachstehend anhand eines in den Zeichnungen dargestellten Ausführungsbeispiels erläutert.

Es zeigen
- Fig. 1: eine perspektivische Explosionsansicht zweier benachbarter Kettenglieder eines Laschenstrangs,

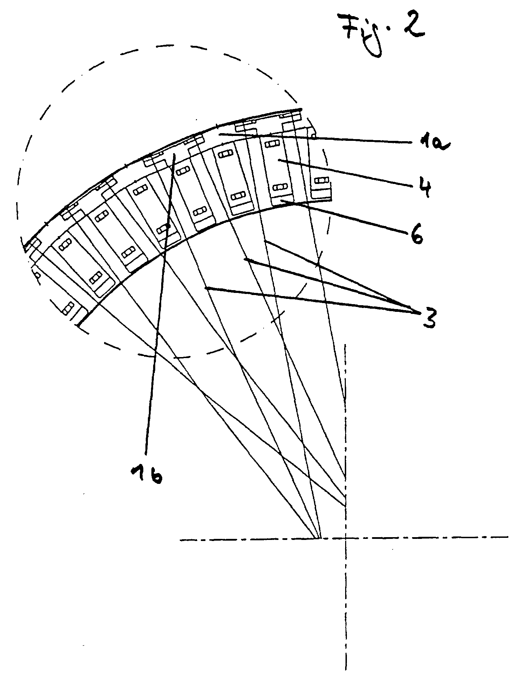

- Fig. 2: eine ausschnittsweise Draufsicht auf eine Energiezuführungskette gemäß der Erfindung,
- Fig. 3: eine vergrößerte ausschnittsweise Draufsicht auf die in Figur 2 gezeigte Energieführungskette, teilweise aufgebrochen,
- Fig. 4: eine schematische Ansicht eines drehbar angeordneten Verbrauchers mit einem an dem Verbraucher angeordneten und mit diesem drehbaren Kettenanschlußpunkt sowie einer an dem Kettenanschlußpunkt angeschlagenen Energieführungskette, die auf einer ortsfesten Führungsrinne abrollbar ist,
- Fig. 5: einen Schnitt entlang der Linien C-D in Fig. 4,
- Fig. 6: die in Fig. 4 eingezeichnete Ansicht A,
- Fig. 7: die Anordnung aus Fig. 4, bei der der bewegliche Anschlußpunkt um 180° in Richtung des in Fig. 4 eingezeichneten Pfeils gedreht wurde,
- Fig. 8: einen Schnitt entlang der Linien C-D in Fig. 7,
- Fig. 9: die in Fig. 7 eingezeichnete Ansicht A,
- Fig. 10: die Ansicht einer Kettenlasche mit beiderseits vorgesehenem Tragrahmen,

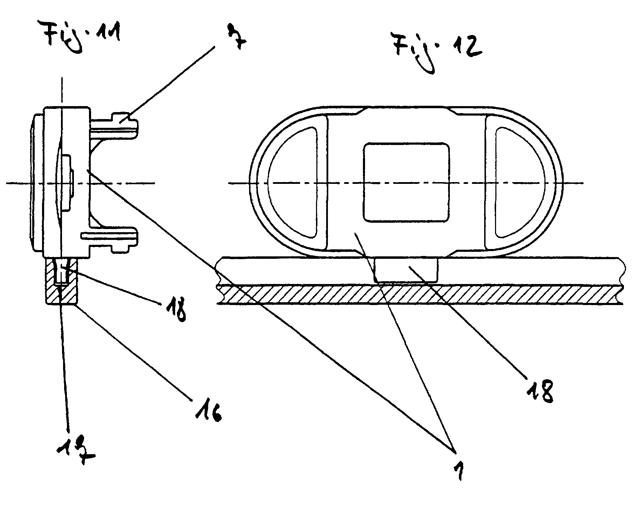

- Fig. 11: eine Kettenlasche mit einem Führungsansatz und
- Fig. 12: eine Seitenansicht einer Kettenlasche mit Führungsansatz, die das Zusammenwirken des Führungsansatzes mit einer Führungsschiene veranschaulicht.

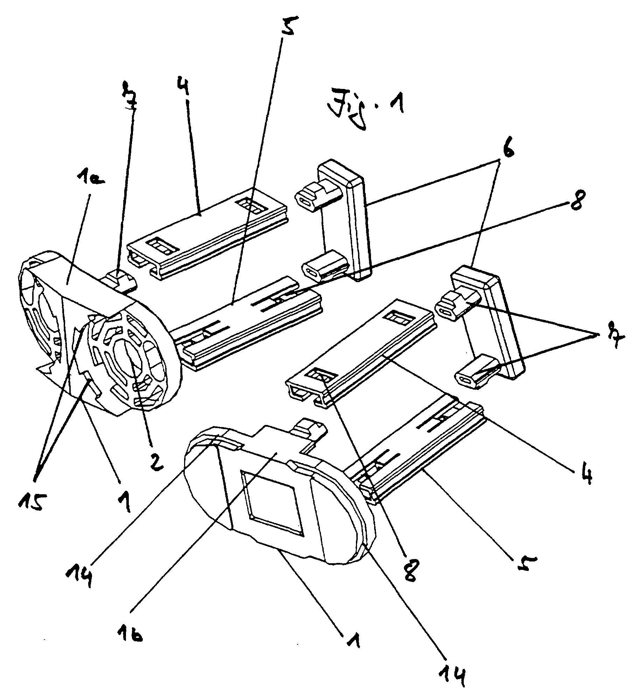

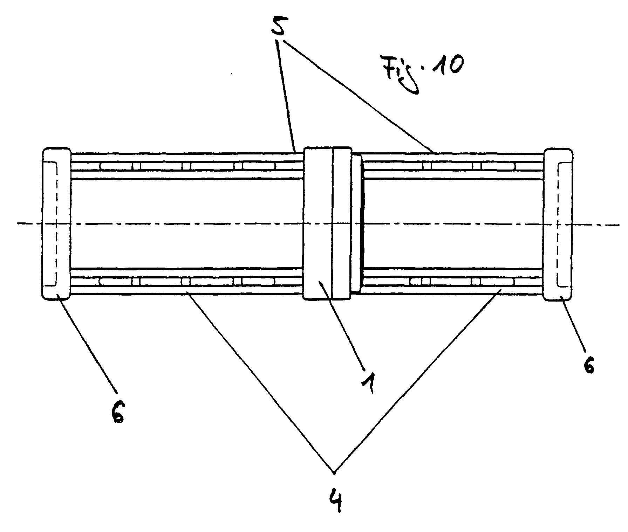

In Fig. 1 sind zwei benachbarte Kettenlaschen 1 eines Laschenstrangs der Energiezuführungskette gemäß der Erfindung dargestellt. Der Einfachheit halber soll nachstehend eine der Kettenlaschen als Innenlasche la, die andere als Außenlasche 1b bezeichnet werden, wobei sich diese Begriffe auf die in dem Ausführungsbeispiel gewählte Lage des von der Energiezuführungskette gebildeten Aufnahmeraums für die Kabel oder Schläuche beziehen und nur für das beschriebene Ausführungsbeispiel zutreffen. Es ist für den Fachmann ersichtlich, daß jeweils beiderseits der Kettenlaschen ein Aufnahmeraum für Energieleiter vorgesehen sein kann, wie dies in Fig. 10 dargestellt ist, wobei dann die Begriffe Außenlasche einerseits und Innenlasche andererseits nicht mehr zutreffend sind. Als Innenlasche la ist hier die mit Löchern 2 versehene Kettenlasche bezeichnet, als Außenlasche 1b ist die mit nicht dargestellten Zapfen versehene Kettenlasche 1 bezeichnet.

Wie ohne weiteres aus den Zeichnungen ersichtlich ist, wird die Energiezuführungskette gemäß der Erfindung durch einen Laschenstrang gebildet, der aus Innenlaschen la und Außenlaschen 1b zusammengesetzt ist, wobei die Außenlaschen 1b über Zapfen in die Löcher 2 der Innenlaschen la eingreifen, so daß die Kettenlaschen 1 einen in mindestens eine Richtung abwinkelbaren Strang bilden, wobei unmittelbar benachbarte, miteinander verbundene Kettenlaschen sich gegenseitig überlappen. Die Innenlasche la liegt dabei jeweils auf den benachbarten Außenlaschen 1b mit der gleichen Seite auf. Die Gelenkbereiche der Innenlasche la sind so zueinander abgewinkelt, daß sich deren Gelenkachsen 3 in einem Punkt schneiden. Die Gelenkachsen 3 der Außenlaschen 1b hingegen verlaufen parallel zueinander, so daß abwechselnd Kettenlaschen 1 mit zueinander parallelen Gelenkachsen 3 und Kettenlaschen 1 mit sich schneidenden Gelenkachsen 3 miteinander verbunden sind. Die Energiezuführungskette erhält dadurch eine Krümmung, wobei die sich schneidenden Gelenkachsen 3 auf einem Kreisbogen angeordnet sind.

Bei dem in Fig. 1 dargestellten Ausführungsbeispiel werden auf einer Seite des Laschenstranges durch obere Querstege 4, untere Querstege 5 und Verbindungsglieder 6 Tragrahmen zur Aufnahme von Kabeln oder Schläuchen gebildet. Die Kettenlaschen 1 sowie die Verbindungsglieder 6 sind jeweils mit an sich bekannten, als Rastleisten ausgebildeten Ansätzen 7 versehen, die mit Rastausnehmungen 8 in den oberen und unteren Querstegen 4, 5 zusammenwirken. Die oberen und unteren Querstege 4, 5 sind nach Art herkömmlicher Querstege für herkömmliche Energiezuführungsketten ausgebildet und werden durch Aufrasten auf die Ansätze 7 der Kettenlaschen 1 sowie der Verbindungsglieder 6 zu einem seitlich an der Kettenlasche 1 freitragend ausgebildeten Tragrahmen zusammengesteckt. Gegebenenfalls können sich längs zwischen den oberen und unteren Querstegen 4, 5 oder sich senkrecht dazu erstreckende Zwischenstege vorgesehen sein, die den Aufnahmeraum für die Kabel oder Schläuche nochmals unterteilen.

Die Verbindungsglieder 6 sowie die oberen und unteren Querstege 4, 5 benachbarter Kettenglieder haben keine Verbindung zueinander. Wie eingangs bereits erwähnt wurde, können anstatt modular zusammensetzbarer aus oberen und unteren Querstegen 4, 5 sowie Verbindungsgliedern 6 bestehende Tragrahmen auch durch einstückig ausgebildete Tragbügel Anwendung finden, die im übrigen entsprechende Rastausnehmungen zum Aufrasten auf die Ansätze 7 der Kettenlaschen aufweisen.

Die mit Löchern 2 versehenen Gelenkbereiche der Innenlaschen la können mit zusätzlichen Durchbrechungen versehen sein, die einerseits mit auf den Außenlaschen 1b versehenen Anschlägen als Schwenkbegrenzungseinrichtungen wirken, andererseits aber auch der Gewichtsersparnis dienen.

Die oberen und unteren Querstege 4, 5 sind in ihrer Breite so bemessen, daß sie, wie dies aus Fig. 3 ersichtlich ist, jeweils den Überlappungsbereich zweier Innenlaschen la mit der betreffenden Außenlasche übergreifen, und so für den Zusammenhalt der Kettenlaschen 1 sorgen sowie als Anschlag gegen die Trennung der Kettenlaschen 1 quer zur Laufrichtung wirken. Als zusätzliche Sicherung gegen ein Auftrennen des Laschenstrangs sind die Außenlaschen 1b auf ihrer Außenseite jeweils mit halbkreisförmig umlaufenden Absätzen 14 versehen, die von Haltevorsprüngen 15 der Innenlaschen la übergriffen werden.

Alternativ können jedoch auch Paßstift- oder Druckknopfverbindungen zur Befestigung der Kettenlaschen 1 aneinander vorgesehen sein.

Das Übergreifen des Überlappungsbereichs zweier Innenlaschen la mit einer Außenlasche 1b durch einen oberen Quersteg 4 ist in einem aufgebrochenen schraffiert dargestellten Bereich in Fig. 3 dargestellt.

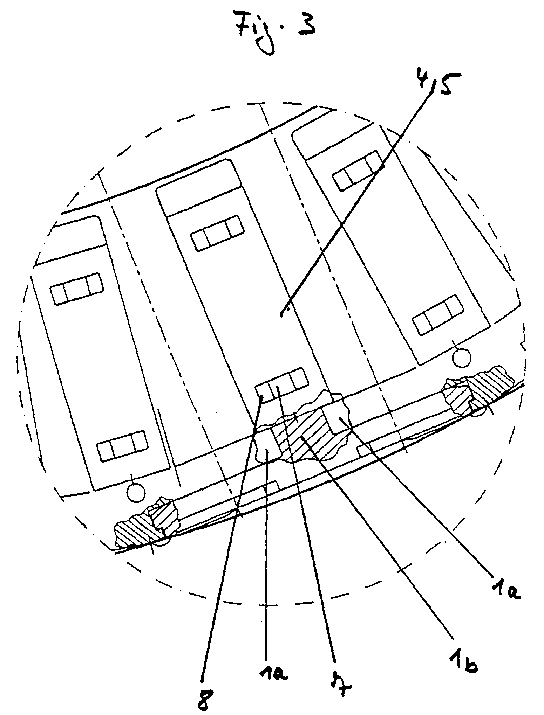

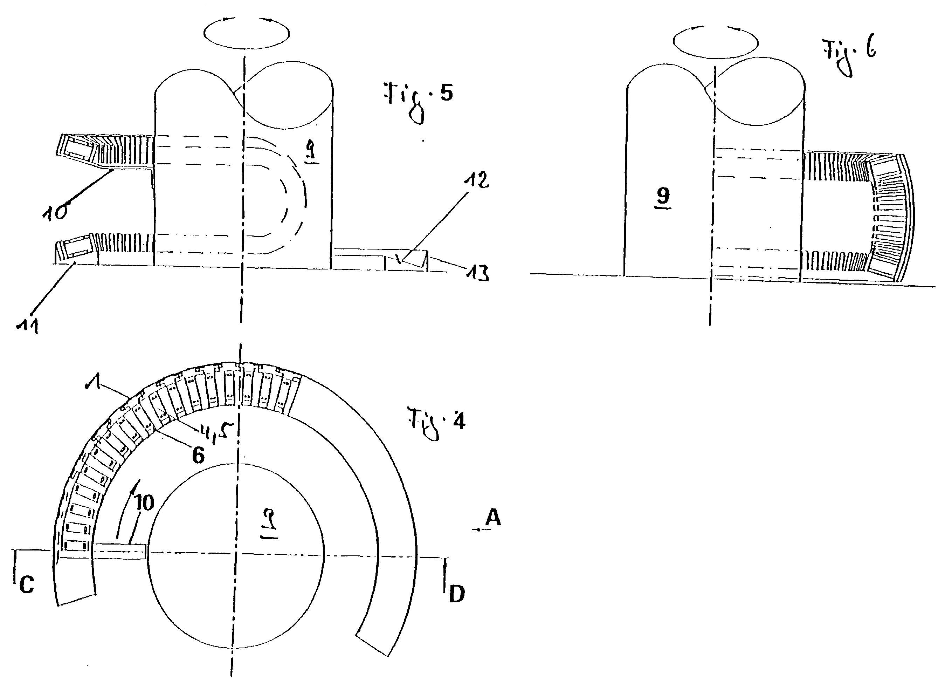

Wie aus den Fig. 4 bis 6 ersichtlich ist, kann die Energiezuführungskette gemäß der Erfindung von einem Anschlußpunkt an einem drehbaren Verbraucher zu einem ortsfesten Anschlußpunkt auf einer in zwei Ebenen gekrümmten Bahn geführt werden. Der Verbraucher ist in den Fig. 4 bis 6 andeutungsweise als um ihre Längsachse drehbare Tragsäule 9 dargestellt. Mit dieser verbunden und somit die Drehbewegung mitvollziehend ist ein als Endbefestigungsteil für die Energieführungskette ausgebildetes Anschlußelement 10. Die Energieführungskette ist von diesem Anschlußelement 10 ausgehend um die Tragsäule 9 herum und in einem Bogen von 180° abwärts geführt. Den Fuß der Tragsäule 9 umgebend ist eine bogenförmig umlaufende Führungsrinne 11 vorgesehen, auf der die Energiezuführungskette auf- und abrollbar ist. Bei dem dargestellten Ausführungsbeispiel ist die Führungsrinne 11 nicht ganz um die Tragsäule 9 herumgeführt, jedoch kann diese auch als geschlossener, d. h. voll umlaufender Ring oder Kranz ausgebildet sein. Die Führungsrinne 11 bildet eine nach außen abfallende, geneigte Auflagefläche 12 und eine sich senkrecht hierzu erstreckende Begrenzungswandung 13 aus.

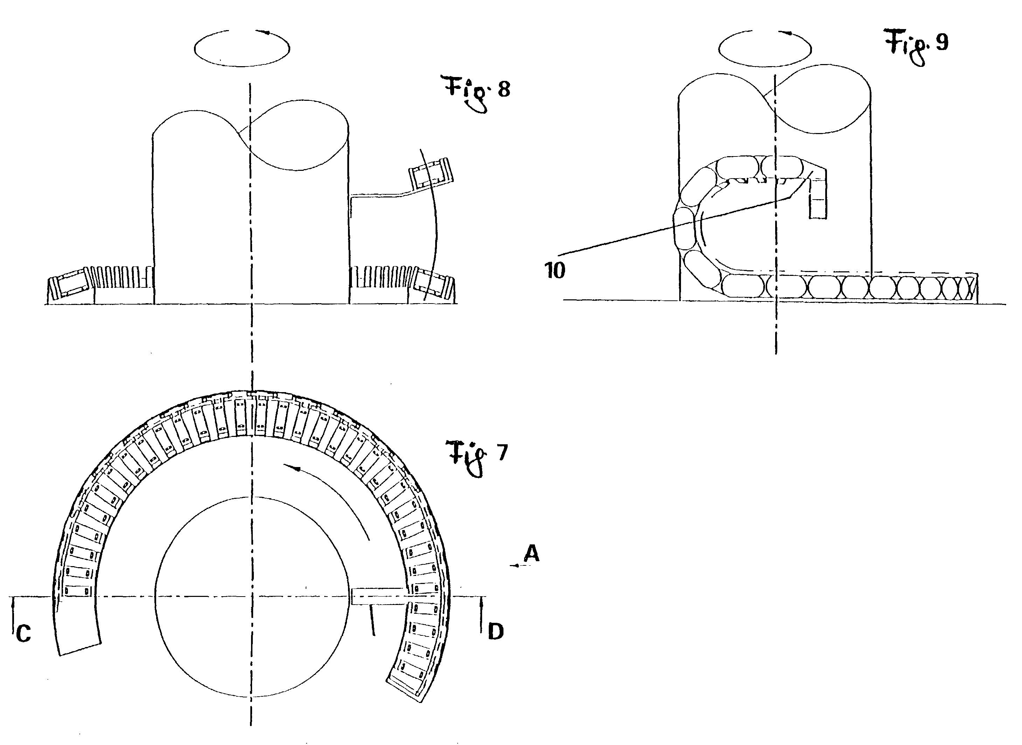

In den Fig. 7 bis 9 ist die Lage der Energiezuführungskette nach einer Schwenkbewegung der Tragsäule 9 um 180° in Richtung des in Fig. 4 eingezeichneten Pfeils dargestellt. In dieser Lage liegt die Energiezuführungskette über den größten Bereich ihrer Länge auf der Führungsrinne 11 auf.

Fig. 10 zeigt ein Ausführungsbeispiel der Erfindung, bei dem beiderseits der Kettenlaschen durch obere und untere Querstege 4, 5 sowie Verbindungsglieder 6 gebildete Tragrahmen vorgesehen sind.

Anstelle der in den Fig. 4 bis 9 dargestellten Führungsrinne 11 kann auch eine bogenförmig verlegte Schiene oder Leiste 16 mit einer Führungsnut 17 vorgesehen sein, in die auf den unteren Schmalseiten der Kettenlaschen 1 vorgesehene Führungsansätze 18 mit Spiel eingreifen. Eine solche Leiste 16, vorzugsweise aus thermoplastischem Material läßt sich leicht in die gewünschte Form biegen, gegebenenfalls durch vorheriges Erwärmen. Ebenso kann in der Führungsrinne 11 eine Nut zur Aufnahme der Führungsansätze 18 vorgesehen sein.

### Bezugszeichenliste

- 1: Kettenlaschen
- 1a: Innenlasche
- 1b: Außenlasche
- 2: Löcher
- 3: Gelenkachsen
- 4: obere Querstege
- 5: untere Querstege
- 6: Verbindungsglieder
- 7: Ansätze
- 8: Rastausnehmungen
- 9: Tragsäule
- 10: Anschlußelement
- 11: Führungsrinne
- 12: Auflagefläche
- 13: Begrenzungswandung
- 14: Absätze
- 15: Haltevorsprünge
- 16: Leiste
- 17: Führungsnut
- 18: Führungsansätze

## Patentansprüche

1. Energiezuführungskette zum Führen von Kabeln, Schläuchen oder dergleichen, von einem ortsfesten zu einem beweglichen Anschlußpunkt auf einer gekrümmten Bahn, mit gelenkig miteinander verbundenen und gegeneinander abwinkelbaren Kettenlaschen (1), wobei die Gelenkachsen wenigstens einiger Kettenlaschen (1) sich schneiden, dadurch gekennzeichnet, daß die Kette durch nur einen einzigen Laschenstrang gebildet wird und wobei an zumindest einigen der Kettenlaschen (1) jeweils wenigstens ein Tragrahmen zur Aufnahme der Kabel vorgesehen ist.

2. Energiezuführungskette nach Anspruch 1, **dadurch gekennzeichnet**, daß der Tragrahmen durch lösbar an den Kettenlaschen (1) befestigbare obere und untere Querstege (4, 5) gebildet wird, die durch ein lösbares Verbindungsglied (6) zu einem geschlossenen Rahmen zusammengesetzt sind.

3. Energiezuführungskette nach Anspruch 1, **dadurch gekennzeichnet**, daß der Tragrahmen durch einen einstückig ausgebildeten U-förmigen Bügel gebildet wird, der lösbar an den Kettenlaschen (1) befestigbar ist.

4. Energiezuführungskette nach einem der Ansprüche 1 bis 3, **dadurch gekennzeichnet**, daß abwechselnd Kettenlaschen (1) mit zueinander parallelen Gelenkachsen (3) und Kettenlaschen (1) mit sich schneidenden Gelenkachsen (3) miteinander verbunden sind.

5. Energiezuführungskette nach einem der Ansprüche 1 bis 4, **dadurch gekennzeichnet**, daß die Gelenkbereiche der Kettenlaschen (1) mit sich schneidenden Gelenkachsen (3) durch zueinander abgewinkelte Laschenbereiche gebildet werden.

6. Energiezuführungskette nach einem der Ansprüche 1 bis 5, **dadurch gekennzeichnet**, daß benachbarte miteinander verbundene Kettenlaschen (1) sich gegenseitig überlappen und über Löcher (2) und zapfen formschlüssig ineinandergreifen.

7. Energiezuführungskette nach einem der Ansprüche 1 bis 6, **dadurch gekennzeichnet**, daß jeweils eine Kettenlasche (1) auf den beiden unmittelbar benachbarten Kettenlaschen (1) mit der gleichen Seite aufliegt, wobei jeweils eine Kettenlasche (1) mit Löchern (2) und die unmittelbar benachbarte Kettenlasche (1) mit hervorstehenden Zapfen versehen ist, die in die Löcher der benachbarten Kettenlasche (1) eingreifen.

8. Energiezuführungskette nach einem der Ansprüche 1 bis 7, **dadurch gekennzeichnet**, daß die jeweils den Tragrahmen bildenden oberen und unteren Querstege (4, 5) oder die Schenkel des Bügels an jeweils einer mit Zapfen versehenen Kettenlasche zumindest in ihren Endabschnitten so bemessen sind, daß sie den Überlappungsbereich mit den benachbarten Kettenlaschen (1) übergreifen und als Anschlag gegen Trennung der Kettenlaschen (1) quer zur Laufrichtung wirken.

9. Energiezuführungskette nach einem der Ansprüche 1 bis 8, **dadurch gekennzeichnet**, daß die mit Zapfen versehenen Kettenlaschen (1) jeweils an ihren äußeren Rändern einen Absatz (14) aufweisen, der von Haltevorsprüngen (15) der mit Löchern (2) versehenen Kettenlaschen übergriffen wird.

10. Energiezuführungskette nach einem der Ansprüche 1 bis 9, **dadurch gekennzeichnet**, daß die Kettenlaschen (1) jeweils mit als Rastleisten ausgebildeten Ansätzen (7) versehen sind, die mit entsprechenden Rastausnehmungen (8) der oberen und unteren Querstege (4, 5) oder der Schenkel des Bügels zusammenwirken.

11. Energiezuführungskette nach einem der Ansprüche 1 oder 2 oder 4 bis 10, **dadurch gekennzeichnet**, daß das Verbindungsglied (6) mit als Rastleisten ausgebildeten Ansätzen (7) versehen ist, die mit Rastausnehmungen (8) der oberen und unteren Querstege (4, 5) zusammenwirken.

12. Energiezuführungskette nach einem der Ansprüche 1 bis 11, **dadurch gekennzeichnet**, daß wenigstens einige der Kettenlaschen (1) auf wenigstens einer ihrer Schmalseiten mit Führungsansätzen (18) versehen sind, die mit einer in einer Führungsschiene oder dergleichen vorgesehenen Führungsnut (17) zusammenwirken.

13. Energiezuführungskette nach Oberbegriff von Anspruch 1, die nur durch einen Laschenstrang gebildet wird, **dadurch gekennzeichnet**, daß an zumindest einigen der Kettenlaschen jeweils wenigstens eine Tragschlaufe zur Aufnahme der Kabel vorgesehen ist.

## Claims

1. Energy guiding chain for guiding cables, hoses and the like from a fixed to a movable connection point on a curved path, with chain straps (1) which are connected to one another in articulated fashion and can be angled relative to one another, where the joint axes of at least some chain straps (1) intersect, **characterised in that** the chain is formed by only one single strap strand and at least some of the chain straps (1) being provided with at least one support frame for accommodating the cables.

2. Energy guiding chain as per Claim 1, **characterised in that** the support frame is formed by upper and lower cross-members (4, 5) which can be attached to the chain straps (1) in a detachable manner and which are assembled to form a closed frame by way of a detachable connecting member (6).

3. Energy guiding chain as per Claim 1, **characterised in that** the support frame consists of a U-shaped bracket designed as a single piece, which can be mounted on the chain straps (1) in a detachable manner.

4. Energy guiding chain as per one of the Claims 1 to 3, **characterised in that** chain straps (1) with parallel joint axes (3) and chain straps (1) with intersecting joint axes (3) are alternately connected to one another.

5. Energy guiding chain as per one of the Claims 1 to 4, **characterised in that** the joint sections of chain straps (1) with intersecting joint axes (3) are formed by strap sections angled towards one another.

6. Energy guiding chain as per one of the Claims 1 to 5, **characterised in that** adjacent chain straps (1) connected to one another overlap and display a positive fit by way of holes (2) and pins.

7. Energy guiding chain as per one of the Claims 1 to 6, **characterised in that** the same side of a chain strap (1) is positioned on top of the two directly adjacent chain straps (1), where one chain strap (1) is provided with holes (2) and the directly adjacent chain strap (1) with protruding pins which snap into the holes of the adjacent chain strap (1).

8. Energy guiding chain as per one of the Claims 1 to 7, **characterised in that** at least the ends of the upper and lower cross-members (4, 5) on one chain strap provided with pins, or the ends of the legs of the bracket, which respectively form the support frame, are dimensioned such that they cover the overlap area with the adjacent chain straps (1) and act as a stop to prevent separation of the chain straps (1) transverse to the direction of motion.

9. Energy guiding chain as per one of the Claims 1 to 8, **characterised in that** the chain straps (1) provided with pins each have a shoulder (14) on their outer edges, which is engaged by locking projections (15) of the chain straps provided with holes (2).

10. Energy guiding chain as per one of the Claims 1 to 9, **characterised in that** the chain straps (1) are each provided with projections (7) designed as snap ridges, which interact with corresponding recesses (8) in the upper and lower cross-members (4, 5) or in the legs of the bracket.

11. Energy guiding chain as per one of the Claims 1 or 2, or 4 to 10, **characterised in that** the connecting member (6) is provided with projections (7) designed as snap ridges, which interact with recesses (8) in the upper and lower cross-members (4, 5).

12. Energy guiding chain as per one of the Claims 1 to 11, **characterised in that** at least some of the chain straps (1) are equipped with guide projections (18) on at least one of their narrow sides, which interact with a guide groove (17) provided in a guide rail or the like.

13. Energy guiding chain as per the generic definition in Claim 1, which is formed by only one strap strand, **characterised in that** at least some of the chain straps are provided with at least one support loop for accommodating the cables.

## Revendications

1. Chaîne d'alimentation en énergie pour le guidage de câbles, de tuyaux ou analogues, depuis un point de raccordement fixe jusqu'à un point de raccordement mobile, sur une trajectoire courbe, comportant des éclisses de chaîne (1) qui sont reliées entre elles de façon articulée et peuvent être disposées obliquement les unes par rapport aux autres, les axes d'articulation croisant au moins quelques éclisses de chaîne (1), caractérisée en ce que la chaîne est formée par une seule ligne d'éclisses, et que respectivement au moins un cadre de support servant à recevoir le câble est prévu au niveau d'au moins quelques-unes des éclisses de chaîne (1).

2. Chaîne d'alimentation en énergie selon la revendication 1, caractérisée en ce que le cadre de support est formé par des barrettes transversales supérieure et inférieure (4,5) pouvant être fixées de façon amovible aux éclisses de chaîne (1) et qui sont réunies par un organe de liaison amovible (6) pour former un cadre fermé.

3. Chaîne d'alimentation en énergie selon la revendication 1, caractérisée en ce que le cadre de support est formé par un étrier en forme de U agencé d'un seul tenant et qui peut être fixé de façon amovible aux éclisses de chaîne (1).

4. Chaîne d'alimentation en énergie selon l'une des revendications 1 à 3, caractérisée en ce que des éclisses de chaîne (1) sont reliées entre elles alternativement par des axes d'articulation (3) des éclisses de chaîne (1), qui sont parallèles entre eux et comportent des axes d'articulation (3) qui se croisent.

5. Chaîne d'alimentation en énergie selon l'une des revendications 1 à 4, caractérisée en ce que les zones d'articulation des éclisses de chaîne (1) possédant des axes d'articulation (3) qui se croisent, sont formées par des parties d'éclisses qui sont coudées les unes par rapport aux autres.

6. Chaîne d'alimentation en énergie selon l'une des revendications 1 à 5, caractérisée en ce que des éclisses de chaîne (1) voisines, qui sont reliées entre elles, sont superposées l'une sur l'autre et engrènent l'une dans l'autre selon une liaison par formes complémentaires au moyen de trous (2) et de tétons.

7. Chaîne d'alimentation en énergie selon l'une des revendications 1 à 6, caractérisée en ce que respectivement une éclisse de chaîne (1) prend appui sur les deux éclisses de chaîne (1) directement voisines, par le même côté, auquel cas respectivement une éclisse de chaîne (1) est équipée de trous (2) et l'éclisse de chaîne directement voisine (1) est pourvue de tétons saillants, qui s'engagent dans les trous de l'éclisse de chaîne voisine (1).

8. Chaîne d'alimentation en énergie selon l'une des revendications 1 à 7, caractérisée en ce que les barrettes transversales supérieure et inférieure (4,5) qui forment respectivement le cadre de support, ou les branches de l'étrier sont dimensionnées, au niveau d'une éclisse de chaîne équipée respectivement d'un téton, de telle sorte qu'elles s'engagent au-dessus de la zone de chevauchement avec les éclisses de chaîne (1) voisines et agissent en tant que butées contre la séparation des éclisses de chaîne (1) transversalement par rapport à la direction de déplacement.

9. Chaîne d'alimentation en énergie selon l'une des revendications 1 à 8, caractérisée en ce que les éclisses de chaîne (1) équipées de tétons possèdent, respectivement sur leurs bords extérieurs, un appendice saillant (14) qui est entouré par des parties saillantes de retenue (15) des éclisses de chaîne équipées de trous (2).

10. Chaîne d'alimentation en énergie selon l'une des revendications 1 à 9, caractérisée en ce que les éclisses de chaîne (1) sont équipées respectivement de parties saillantes (7) agencées sous la forme de barrettes d'encliquetage et qui coopèrent avec les évidements d'encliquetage correspondants (8) des barrettes transversales supérieure et inférieure (4,5) ou les branches de l'étrier.

11. Chaîne d'alimentation en énergie selon l'une des revendications 1 ou 2, ou 4 à 10, caractérisée en ce que l'organe de liaison (6) comporte des appendices saillants (7) agencés sous la forme de barrettes d'encliquetage, qui coopèrent avec les évidements d'encliquetage (8) des barrettes transversales supérieure et inférieure (4,5).

12. Chaîne d'alimentation en énergie selon l'une des revendications 1 à 11, caractérisée en ce qu'au moins quelques-unes des éclisses de chaîne (1) sont pourvues, sur au moins un de leurs côtés étroits, de parties saillantes de guidage (18) qui coopèrent avec une rainure de guidage (17) prévue dans un rail de guidage ou analogue.

13. Chaîne d'alimentation en énergie selon le préambule de la revendication 1 qui est formée par une ligne d'éclisses, est caractérisée en ce qu'au moins une boucle de support servant à loger le câble est prévue sur au moins quelques-unes des éclisses de chaîne.
